(19) Europäisches Patentamt
European Patent Office
Office européen des brevets

(11) **EP 2 846 262 A1**

(12) **EUROPEAN PATENT APPLICATION**
published in accordance with Art. 153(4) EPC

(43) Date of publication:
**11.03.2015 Bulletin 2015/11**

(51) Int Cl.:
***G06F 9/445*** (2006.01)

(21) Application number: **13785276.0**

(86) International application number:
**PCT/CN2013/074782**

(22) Date of filing: **26.04.2013**

(87) International publication number:
**WO 2013/163939 (07.11.2013 Gazette 2013/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.05.2012 CN 201210136280**

(71) Applicant: **Zhang, Weiming**
**Shenzhen, Guangdong 518000 (CN)**

(72) Inventor: **Zhang, Weiming**
**Shenzhen, Guangdong 518000 (CN)**

(74) Representative: **Hellmich, Wolfgang**
**Lortzingstrasse 9**
**81241 München (DE)**

(54) **INFORMATION PROCESSING TERMINAL AND PROCESSING METHOD THEREFOR**

(57)    An information processing terminal and a processing method therefor. The information processing terminal comprises an execution component, a manipulation component and a display component, wherein the manipulation component is used as an external manipulation device of the execution component. The manipulation component comprises one or more of the following control modules: a key module, a gravity sensor module, a gyroscope sensor module and a voice input module. The execution component also comprises a preprocessing module and an operation conversion module. The preprocessing module is used for preprocessing a control signal generated by each control module of the manipulation component, converting same into a signal corresponding to the control signal input in each application program, and generating a respective preprocessing record for each application program. The operation conversion module is used for converting the control signal generated by each control module of the manipulation component according to the preprocessing record of a certain application program during the running process of the application program. The converted control signal finally becomes a signal corresponding to the control signal of the application program and is executed.

Fig.2

EP 2 846 262 A1

## Description

### TECHNICAL FIELD

The present application relates to an information processing terminal and processing method therefor, in particular relates to an information converting and processing terminal for a touching operation on a specific area of a corresponding touch screen, which enabling applications developed for intelligent mobile devices based on Android system to be transferred to TV set-top box facilely.

### BACKGROUND

In recent years, intelligent mobile devices based on Android system, including Android intelligent mobile phone and Android pad computer, increase enormously, which as a consequence, proliferate various applications developed for these devices. These applications are mostly manipulated by touch screens deployed on the intelligent mobile phone and pad computer. For example, operations in car racing applications, such as braking, drifting and so on, are manipulated by touching specific areas on a touch screen. Recently, intelligent TV set-top boxes based on Android system present. These intelligent TV set-top boxes are all capable of operating applications developed based on Android system. For instance, car racing applications operable on Android intelligent mobile phone and Android pad computer also can function on Android intelligent TV set-top box. However, most of the Android applications are developed for intelligent mobile devices deployed with touch screens. Accordingly, when such applications operate on the Android intelligent TV set-top box without a touch screen, they can only be manipulated by remote control devices inconveniently.

In additional, when such applications operate on the Android intelligent mobile devices, the employed gravity sensing axis and gyroscope axis can be different if the orientations of the display screen are different. However, when such applications operate on Android intelligent TV set-top box, different applications should select different gravity sensing axes and gyroscope axes in the remote control devices for controlling as the TV screen keep a vertical orientation all the time. Meanwhile, the various applications may require different sensitivities for each employed gravity sensing axis and gyroscope axis. Accordingly, when operating, the sensitivity of each employed gravity sensing axis and gyroscope axis should be adjusted to adopt each application best so as to obtain a uniform operation experience by manipulating these applications via a same manipulation device.

It becomes an urgent problem that how to experience these huge number of applications which were developed for intelligent mobile devices on the Android intelligent TV set-top box faultlessly.

## SUMMARY

An objective of the present application is providing an information processing terminal and an information processing method which enable the developer of the Android applications to exploit the TV set-top box market by using the applications developed for intelligent mobile devices directly without developing a specific version for the Android intelligent TV set-top box, so as to broaden market space while increasing no cost at all.

According to one aspect, an information processing terminal is provided. The information processing terminal comprises an execution component for loading and executing applications, a manipulation component for controlling and operating the applications in the execution component and a display component for displaying a user interface of each application, wherein the manipulation component is used as an external manipulation device of the execution component by accessing the execution component via a wireless or wired interface. The manipulation component comprises one or more of the following control modules: a key module, a gravity sensor module, a gyroscope sensor module and a voice input module. The execution component also comprises a preprocessing module and an operation conversion module. The preprocessing module is used for preprocessing a control signal generated by each control module of the manipulation component, converting same into a signal corresponding to the control signal input in each application program, and generating a respective preprocessing record for each application program. The operation conversion module is used for converting the control signal generated by each control module of the manipulation component according to the preprocessing record of a certain application program during the running process of this application program. The converted control signal finally becomes a signal corresponding to the control signal of the application program and then is executed.

According to a type of the control module deployed for the manipulation component, the preprocessing module comprises one or more of the following conversions.

a) Conversion preprocessing of the key module

A screen touching operation which should be replaced by a key in each application is corresponded to a key in the key module of the manipulation component for such replacing, in which, the generated preprocessing record is a series of corresponding relationships between the key and the screen touching operation.

b) Conversion preprocessing of the gravity sensor module

One or more gravity sensing axes employed in each application are corresponding to one or more gravity sensing axes of the gravity sensor module of the manipulation component one by one, in which, the generated preprocessing record comprises corresponding relationships between the one or more gravity sensing axes. Or a sensitivity coefficient of the corresponding gravity sensing axis is further defined.

c) Conversion preprocessing of the gyroscope sensor module

One or more gyroscope axes employed in each application are corresponding to one or more gyroscope axes of the gyroscope sensor module of the manipulation component one by one, in which, the generated preprocessing record comprises corresponding relationships between the one or more gyroscope axes.

d) Conversion preprocessing of the voice input module

A screen touching operation which should be replaced by a voice instruction in each application is corresponded to a voice instruction input via the voice input module of the manipulation component, in which, the generated preprocessing record is corresponding relationships between a series of the voice instructions and the screen touching operation.

Preferably, the screen touching operation in step a) and d) is one or more screen points, one or more screen vectors, one or more screen curves which are screen touched or clicked. The screen touching operation comprises an ordinal operation on a single-channel touch device and simultaneous operations in a multi-channel touch device.

Preferably, the b) conversion preprocessing of the gravity sensor module further comprises recording positive and negative directions of each corresponding gravity sensing axis of one or more gravity sensor modules and the generated preprocessing record comprises corresponding relationships between the positive and negative directions of each corresponding gravity sensing axis.

Preferably, the b) conversion preprocessing of the gravity sensor module further comprises defining a sensitivity coefficient of each corresponding gravity sensing axis of one or more gravity sensor modules and the generated preprocessing record comprises corresponding relationships between the sensitivity coefficients of each corresponding gravity sensing axis.

Preferably, the c) conversion preprocessing of the gyroscope sensor module further comprises recording positive and negative directions of each corresponding gyroscope axis of one or more gyroscope sensor modules and the generated preprocessing record comprises corresponding relationships between the positive and negative directions of each corresponding gyroscope axis.

Preferably, the c) conversion preprocessing of the gyroscope sensor module further comprises defining a sensitivity coefficient of each corresponding gyroscope axis of one or more gyroscope sensor modules and the generated preprocessing record comprises corresponding relationships between the sensitivity coefficients of each corresponding gyroscope axis.

The display component and the execution component are integrated into one device, such as a pad computer, an integrative intelligent TV, an integrative desktop computer and so on.

The execution component is an intelligent TV set-top box using a rockchip microprocessor, a flash memory, Android system as operating system and having an HDMI output interface and a plurality of USB2.0 interfaces.

The manipulation component is an air mouse remote controller including a 3-axis gravity sensor module and a 3-axis gyroscope sensor module and communicating with Dongle connecting to the USB interfaces of the TV set-top box via a wireless manner for manipulating the same.

According to one aspect, an information processing method for an information processing terminal is provided. The information processing terminal comprises an execution component for loading and executing applications, a manipulation component for controlling and operating the applications in the execution component and a display component for displaying a user interface of each application, wherein the manipulation component is used as an external manipulation device of the execution component by accessing the execution component via a wireless or wired interface. The manipulation component comprises one or more of the following control modules: a key module, a gravity sensor module, a gyroscope sensor module and a voice input module. The information processing method comprises following steps:

a preprocessing step of preprocessing a control signal generated by each control module of the manipulation component, converting same into a signal corresponding to the control signal input in each application program, and generating a respective preprocessing record for each application program;

an operation conversion step of converting the control signal generated by each control module of the manipulation component according to the preprocessing record of a certain application program during the running process of this application program, wherein the converted control signal finally becomes a signal corresponding to the control signal of the application program and then is executed.

According to a type of the control module deployed for the manipulation component, the preprocessing step comprises one or more of the following conversions.

a) Conversion preprocessing of the key module

A screen touching operation which should be replaced by a key in each application is corresponded to a key in the key module of the manipulation component for such replacing, in which, the generated preprocessing record is a series of corresponding relationships between the key and the screen touching operation.

b) Conversion preprocessing of the gravity sensor module

One or more gravity sensing axes employed in each application are corresponding to one or more gravity sensing axes of the gravity sensor module of the manipulation component one by one, in which, the generated preprocessing record comprises corresponding relationships between the one or more gravity sensing axes. Or a sensitivity coefficient of the corresponding gravity sensing axis is further defined.

c) Conversion preprocessing of the gyroscope sensor module

One or more gyroscope axes employed in each application are corresponding to one or more gyroscope axes of the gyroscope sensor module of the manipulation component one by one, in which, the generated preprocessing record comprises corresponding relationships between the one or more gyroscope axes.

d) Conversion preprocessing of the voice input module

A screen touching operation which should be replaced by a voice instruction in each application is corresponded to a voice instruction input via the voice input module of the manipulation component, in which, the generated preprocessing record is corresponding relationships between a series of the voice instructions and the screen touching operation.

Preferably, the screen touching operation in step a) and d) is one or more screen points, one or more screen vectors, one or more screen curves which are screen touched or clicked. The screen touching operation comprises an ordinal operation on a single channel touch device and simultaneous operations in a multi-channel touch device.

Preferably, the b) conversion preprocessing of the gravity sensor module further comprises recording positive and negative directions of each corresponding gravity sensing axis of one or more gravity sensor modules and the generated preprocessing record comprises corresponding relationships between the positive and negative directions of each corresponding gravity sensing axis.

Preferably, the b) conversion preprocessing of the gravity sensor module further comprises defining a sensitivity coefficient of each corresponding gravity sensing axis of one or more gravity sensor modules and the generated preprocessing record comprises corresponding relationships between the sensitivity coefficients of each corresponding gravity sensing axis.

Preferably, the c) conversion preprocessing of the gyroscope sensor module further comprises recording positive and negative directions of each corresponding gyroscope axis of one or more gyroscope sensor modules and the generated preprocessing record comprises corresponding relationships between the positive and negative directions of each corresponding gyroscope axis.

Preferably, the c) conversion preprocessing of the gyroscope sensor module further comprises defining a sensitivity coefficient of each corresponding gyroscope axis of one or more gyroscope sensor modules and the generated preprocessing record comprises corresponding relationships between the sensitivity coefficients of each corresponding gyroscope axis.

Preferably, the information processing method further comprises when one application operates in different scenes so that a control signal generated by a same control module on the execution component should have different conversions, multiple groups of preprocessing record would be generated in the corresponding conversion preprocessing step of such control module in the preprocessing record

Preferably, the information processing method further comprises selecting one group of preprocessing record which is used for operating the conversion module via an artificial operation from the multiple groups of preprocessing record corresponding a certain control module in the preprocessing record of one application during an operation process of the application.

Preferably, the artificial operation comprises a key, a voice instruction or a menu selection operation.

Preferably, the information processing method further comprises packaging respective preprocessing record of each application in a document form together with installation program of each application into one installation package which is then stored on a server of an app store, wherein when setting up, the installation package is downloaded from the server to the intelligent processing equipment, in which the preprocessing record is stored in a special directory of the application after being unpackaged, and when the application is started up, the corresponding preprocessing record is loaded into a system memory from the special directory.

The present application has following advantages. Firstly, the developer of the Android applications can exploit the TV set-top box market by using the applications developed for intelligent mobile devices directly without developing a specific version for the Android intelligent TV set-top box, so as to broaden market space while increasing no cost at all. Secondly, the Android set-top box manufacturers can easily find massive applications, avoiding the corner that the appropriate applications are too scarce to exploit broader set-top box Market.

Thirdly, the set-top box users can enjoy the massive ready Android applications on one hand with reduced cost of TV Android application as the developer of the Android applications on the other hand never costs more.

**BRIEF DESCRIPTION OF THE DRAWINGS**

Fig. 1 is a structural diagram illustrating an embodiment of the execution component according to present application.

Fig. 2 is a panel diagram of the manipulation component, an air mouse remote controller, according to present application, in which the microphone input hole presents on the left of the panel, the key area presents in the middle of the panel and the indicating lamp presents on the right of the panel.

Fig. 3 shows the definition about each axis of the 3-axis gravity sensor module when the remote controller of Fig.2 is arranged with key face upward while maintaining its left and right direction.

Fig. 4 shows the definition about each axis of the 3-axis gyroscope sensor module when the remote controller of Fig.2 is arranged with key face upward while maintaining its left and right direction in Fig.2.

Fig. 5 is a diagram illustrating a user interface of the application in an embodiment according to present application.

Fig. 6 is a diagram illustrating another user interface of the application in an embodiment according to present application.

Fig. 7 is a diagram illustrating user interface scene 1 of the application in a third embodiment according to present application.

Fig. 8 is a diagram illustrating user interface scene 2 of the application in a third embodiment according to present application.

**DETAILED DESCRIPTION OF THE PREFERRED EMBODIMENT**

These present application will be more fully understand from the following description and drawings.

Embodiment 1

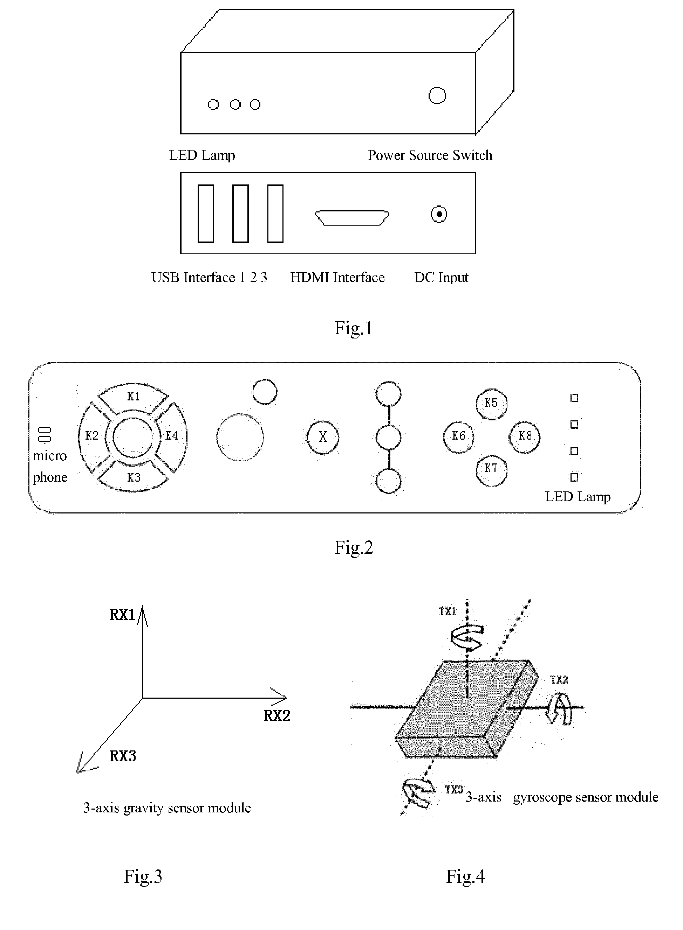

As shown in Fig.1, Fig.2, Fig.3 and Fig.4, the information processing terminal comprises an execution component for loading and executing applications, a manipulation component for controlling and operating the applications in the execution component and a display component for displaying a user interface of each application. The manipulation component is used as an external manipulation device of the execution component by accessing the execution component via a wireless or wired interface. In present embodiment, the execution component is an intelligent TV set-top box using a rockchip RK2918 ARM Cortex-A8 microprocessor with a dominant frequency of 1.2GHz and 1 GB RAM, a flash memory of 4 GB, Android system 2.3.2 as operating system and having an HDMI output interface and three USB2.0 interfaces. The soft in the intelligent TV set-top box has simulated three logic gravity sensing axes YR1, YR2 and YR3 and three gyroscope axes YT1, YT2, YT3. Meanwhile, the soft has further simulated one multi-channel touch device. The intelligent TV set-top box outputs to high-definition LCD TV via the HDMI. The manipulation component is an air mouse remote controller having a panel as shown in Fig.2. The air mouse remote controller has a 3-axis gravity sensor module, a 3-axis gyroscope sensor module and a microphone (that is, the voice input module). When the air mouse remote controller in Fig.2 is placed with key surface upward while maintaining its left and right direction, then the definition of each axis is shown as Fig.3. The air mouse remote controller communicates with Dongle connecting to the USB interfaces of the TV set-top box via a wireless manner for manipulating the same.

The intelligent TV set-top box is loaded with racing gravity game A, racing gravity game B and racing gravity game C which are applications with touching operation and gravity sensing.

The execution component also comprises a preprocessing module and an operation conversion module.

The preprocessing module is used for preprocessing a control signal generated by each control module of the manipulation component, converting same into a signal corresponding to the control signal input in each application program, and generating a respective preprocessing record for each application program.

The operation conversion module is used for converting the control signal generated by each control module of the manipulation component according to the preprocessing record of a certain application program during the running process of this application program. The converted control signal finally becomes a signal corresponding to the control signal of the application program and then is executed.

In present embodiment, the preprocessing module of the racing gravity game A comprises following steps.

Firstly, a conversion preprocessing of the key module is implemented.

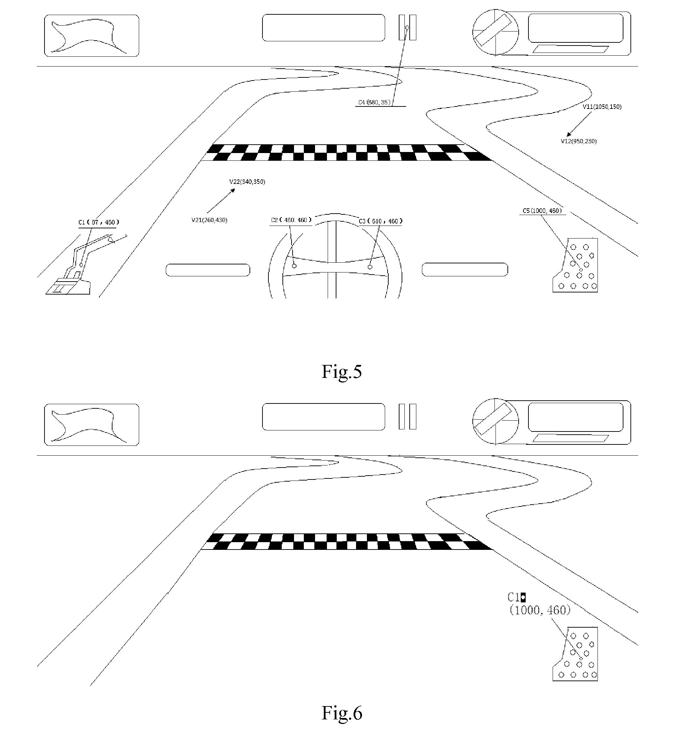

When the racing gravity game A is run on one Android pad computer, its user interface is shown in Fig.5.

We find that the racing gravity game A has six following screen touching operations which should be replaced by key operations:

(1) an operation of clicking screen point C1 (87, 460) which representing acceleration;

(2) an operation of clicking screen point C2 (460, 460) which representing turning left;

(3) an operation of clicking screen point C3 (610, 460) which representing turning right;

(4) an operation of clicking screen point C4 (680, 35) which representing pause;

(5) an operation of clicking screen point C5 (1000, 460) which representing deceleration;

(6) an operation of drawing a vector of V11(1050,150)→V12(950,230) in channel 1 and a vector of V21(260,430)→V22(340,350) in channel 2 of the touch screen, which representing scene reduction at the same time.

The above six screen touching operations are replaced by key operations of replacing key K1, K5, K6, K8, K7and K3 on the air mouse remote controller. The conversion preprocessing record of the key module is as follows.
k1 (87, 460)
k5 (460, 460)
k6 (610, 460)
k8 (680, 35)
k7 (1000, 460)
K3 (channel 1(1050, 150)→(950,230), channel 2(260,430)→(340,350))

Meanwhile, we discover that the same six screen touching operations can be implemented by six voice instructions. Accordingly, the conversion preprocessing record of the voice module is as follows.

Voice instruction "acceleration" (87, 460) is corresponding to clicking screen point (87, 460).

Voice instruction "turning left" (460, 460) is corresponding to clicking screen point (460, 460).

Voice instruction "turning right" (610, 460) is corresponding to clicking screen point (610, 460).

Voice instruction "pause" (680, 35) is corresponding to clicking screen point (680, 35).

Voice instruction "deceleration" (1000, 460) is corresponding to clicking screen point (1000, 460).

Voice instruction "scene reduction" (channel 1(1050, 150)→(950, 230), channel 2(260, 430)→(340, 350)) is corresponding to drawing a vector of V11(1050, 150)→V12(950, 230) in channel 1 and a vector of V21(260, 430)→V22(340, 350) in channel 2 of the touch screen, which representing scene reduction at the same time.

Secondly, a conversion preprocessing of the gravity sensor module is implemented.

The racing gravity game A is run on the TV set-top box and the air mouse remote controller is used for manipulating. At this time, we do no conversion to the gravity sensing axis data from the remote controller. Accordingly, the data from the three gravity axes RX1, RX2, RX3 of the remote controller is directly used as the data of YR1, YR2 and YR3.

We discover that the application uses two gravity axes YR1 and YR2 for controlling, in which, inclined gravity axis YR1 (which is corresponding to gravity axis RX1 ) enables the racing car to turn left or right, and inclined gravity axis YR2 (which is corresponding to gravity axis RX2 ) enables the racing car to move forward or backward.

In order to provide better user experience when using the air mouse remote controller for manipulating the racing gravity game A, RX2 should be used for controlling the left and right turning of the racing car, and RX3 should be used for controlling the forward or backward moving of the racing car. Accordingly, when holding the air mouse remote controller transversely and horizontally, the racing car turns left by inclining the remote controller to the left, turns right by inclining the remote controller to the right, moves forward by inclining the remote controller forward, and moves backward by inclining the remote controller backward.

Accordingly, when running the racing gravity game A, we have to convert the data from the gravity axis RX2 of the remote controller to the logic gravity sensing axis YR1 inside the TV set-top box, and the data from the gravity axis RX3 of the remote controller to the logic gravity sensing axis YR2 inside the TV set-top box, that is, YR1 = RX2 and YR2 = RX3.

After making above data conversion about the gravity axis of the remote controller by running the converting soft on the background of the TV set-top box, we would run the racing gravity game A on the TV set-top box again. Now, we find that when holding the air mouse remote controller transversely and horizontally, the racing car turns right by inclining the remote controller to the left, and turns left by inclining the remote controller to the right, which means the control direction of axis RX2 is opposite. Accordingly, the data of axis RX2 should be corrected. We further find that the axis RX2 has a too high sensitivity, such that even axis RX2 is slightly inclined, the racing car turns a lot, which make it difficult for the user to manipulate. Therefore, we have to depress the sensitivity of the axis RX2. After repeatedly testing, we find that a sensitivity coefficient of 0.4 is appropriate, so YR1 = RX2 * (-1 )* 0.4.

Further test teaches the axis RX3 data need no further modification, so YR2=RX3 keeps.

In such a way, the conversion preprocessing record of the gravity sensor module is as follows.

$$YR1 = RX2 * (-1) * 0.4$$

$$YR2 = RX3 * (1) * 1$$

Finally, a conversion preprocessing of the gyroscope sensor module is implemented.

The racing gravity game A is run on the TV set-top box. It is found that no gyroscope sensing axis data is employed by the racing gravity game A. Accordingly, the conversion preprocessing record of the gyroscope sensor module is empty.

The operation conversion module of present application is an underlying service program which starts up automatically and runs in the system background after being loaded to the Android program when the set top box is switched on.

The operation conversion module monitors started applications in real time. When one application is started up, the operation conversion module searches corresponding preprocessing record of such application according to its name, and converts the received control signal from the remote controller according to the conversion preprocessing record of each control module of the remote controller immediately.

When a key pressing or loosing event is received, if the operation conversion module finds out that the key is used for replacing a screen touching operation based on the conversion preprocessing record of the key module, it will convert such event to corresponding screen touching operation according to the conversion preprocessing record. The screen touching operation is sent to the application via the stander interface of the Android system.

When a data of gravity sensing axis is received, if the operation conversion module finds out that the data of gravity sensing axis is used by the application based on the conversion preprocessing record of the gravity sensor module, it will convert such data to internal logic gravity sensing axes data according to the conversion preprocessing record. The logic gravity sensing axes data is sent to the application via the stander interface of the Android system.

When a data of gyroscope sensing axis is received, if the operation conversion module finds out that the data of gyroscope sensing axis is used by the application based on the conversion preprocessing record of the gyroscope sensor module, it will convert such data to internal logic gyroscope sensing axes data according to the conversion preprocessing record. The logic gyroscope sensing axes data is sent to the application via the stander interface of the Android system.

When a voice instruction input by a voice input module is received, if the operation conversion module finds out that the voice instruction is used for replacing a screen touching operation based on the conversion preprocessing record of the voice input module, it will convert such voice instruction to corresponding screen touching operation according to the conversion preprocessing record. The screen touching operation is sent to the application via the stander interface of the Android system.

When the racing gravity game A is started up, the operation conversion module firstly searches corresponding preprocessing record, and then converts the received control signal from the remote controller according to the conversion preprocessing record.

When data of RX1 axis from the remote controller is received, no conversion is made.

When data of RX2 axis from the remote controller is received, such data is converted to YR1 according to YR1 = RX2 * (-1) * 0.4.

When data of RX3 axis from the remote controller is received, such data is converted to YR2 according to YR2 = RX3 * (1) * 1.

When data of TX1, TX2 and TX3 axes from the gyroscope is received, no conversion is made.

During the racing gravity game A, data of RX1, RX2, RX3 TX1, TX2 and TX3 axes is received by one hundred pieces every second, and the operation conversion module functions as above manner.

Each key is trigged by the user manually as follows.

When an event of pressing key K5 is received, such event will be converted into a touching event at screen point (460,460).

After a while, an event of loosing key K5 is received, such event will be converted into a touching ending event at screen point (460,460).

When the racing gravity game A is closed, the above conversion terminates.

When the racing gravity game C is started up, the operation conversion module firstly searches corresponding preprocessing record, and then converts the received control signal from the remote controller according to the conversion preprocessing record.

The data conversion preprocessing for the gravity sensing axis and gyroscope axis in the racing gravity game C is similar as that in the racing gravity game A. But the conversion preprocessing for the key module in the racing gravity game C and the racing gravity game A are different. The operation conversion module has detected that the racing gravity game C has following two groups of conversion preprocessing record for the key module.

Group 1:

k1 (87, 460)

k5 (460, 460)

k6 (610, 460)

k8 (680, 35)

k7 (1000, 460)

Group 2:

k1 (300, 510)

k2(446, 510)

k3(680, 510)

k4(680, 30)

k5(900, 510)

k6(81,460)

At first, the operation conversion module uses conversion preprocessing record of group 1 as the conversion basis. Now, the game runs in scene 1. When the game runs in scene 2, the operator may realize that the game has switched its scene and the keys have different functions. Then the operator can press "X" key on the remote controller. When the remote controller receives the "X" key, it uses conversion preprocessing record of group 2 for key conversion.

Embodiment 2

As shown in Fig.1, Fig.2, Fig.3 and Fig.4, the information processing terminal comprises an execution component for loading and executing applications, a manipulation component for controlling and operating the applications in the execution component and a display component for displaying a user interface of each application. The manipulation component is used as an external manipulation device of the execution component by accessing the execution component via a wireless or wired interface. In present embodiment, the execution component is an intelligent TV set-top box using a rockchip RK2918 ARM Cortex-A8 microprocessor with a dominant frequency of 1.2GHz and 1 GB RAM, a flash memory of 4 GB, Android system 2.3.2 as operating system and having an HDMI output interface and three USB2.0 interfaces. The soft in the intelligent TV set-top box has simulated three logic gravity sensing axes YR1, YR2 and YR3 and three gyroscope axes YT1, YT2, YT3. Meanwhile, the soft has further simulated one multi-channel touch device. The intelligent TV set-top box outputs to high-definition LCD TV via the HDMI. The manipulation component is an air mouse remote controller having a panel as shown in Fig.2. The air mouse remote controller has a 3-axis gravity sensor module, a 3-axis gyroscope sensor module and a microphone (that is, the voice input module). When the air mouse remote controller in Fig.2 is placed with key surface upward while maintaining its left and right direction, then the definition of each axis is shown as Fig.3. The air mouse remote controller communicates with Dongle connecting to the USB interfaces of the TV set-top box via a wireless manner for manipulating the same.

The intelligent TV set-top box is loaded with racing gravity game A, racing gravity game B and racing gravity game C which are applications with touching operation and gravity sensing.

The execution component also comprises a preprocessing module and an operation conversion module.

The preprocessing module is used for preprocessing a control signal generated by each control module of the manipulation component, converting same into a signal corresponding to the control signal input in each application program, and generating a respective preprocessing record for each application program.

The operation conversion module is used for converting the control signal generated by each control module of the manipulation component according to the preprocessing record of a certain application program during the running process of this application program. The converted control signal finally becomes a signal corresponding to the control signal of the application program and then is executed.

In present embodiment, the preprocessing module of the racing gravity game B comprises following steps.

Firstly, a conversion preprocessing of the key module is implemented.

When the racing gravity game B is run on one Android pad computer, its user interface is shown in Fig.6.

We find that the racing gravity game B just has one screen area whose touching control should be replaced by the key, having a coordinate of C1(1000, 460). Touching this screen area means braking in the game.

C1 area uses key K8 as a replacing key. The conversion preprocessing record of the key module in the racing gravity game B is as follows.

K8, (1000, 460).

Secondly, a conversion preprocessing of the gravity sensor module is implemented.

The test of racing gravity game B teaches the conversion preprocessing of the gravity sensor module is totally same as that the racing gravity game A, the preprocessing records in both racing gravity games are exactly the same.

Finally, a conversion preprocessing of the gyroscope sensor module is implemented.

The racing gravity game B is run on the TV set-top box. It is found that no gyroscope sensing axis data is employed by the racing gravity game B. Accordingly, the conversion preprocessing record of the gyroscope sensor module is empty.

The operation conversion module of present embodiment is same as that in embodiment 1.

Embodiment 3

As shown in Fig.1, Fig.2, Fig.3 and Fig.4, the information processing terminal comprises an execution component for loading and executing applications, a manipulation component for controlling and operating the applications in the execution component and a display component for displaying a user interface of each application. The manipulation component is used as an external manipulation device of the execution component by accessing the execution component via a wireless or wired interface. In present embodiment, the execution component is an intelligent TV set-top box using a rockchip RK2918 ARM Cortex-A8 microprocessor with a dominant frequency of 1.2GHz and 1 GB RAM, a flash memory of 4 GB, Android system 2.3.2 as operating system and having an HDMI output interface and three USB2.0 interfaces. The soft in the intelligent TV set-top box has simulated three logic gravity sensing axes YR1, YR2 and YR3 and three gyroscope axes YT1, YT2, YT3. Meanwhile, the soft has further simulated one multi-channel touch device. The intelligent TV set-top box outputs to high-definition LCD TV via the HDMI. The manipulation component is an air mouse remote controller having a panel as shown in Fig.2. The air mouse remote controller has a 3-axis gravity sensor module, a 3-axis gyroscope sensor module and a microphone (that is, the voice input module). When the air mouse remote controller in Fig.2 is placed with key surface upward while maintaining its left and right direction, then the definition of each axis is shown as Fig.3. The air mouse remote controller communicates with Dongle connecting to the USB interfaces of the TV set-top box via a wireless manner for manipulating the same.

The intelligent TV set-top box is loaded with racing gravity game A, racing gravity game B and racing gravity game C which are applications with touching operation and gravity sensing.

The execution component also comprises a preprocessing module and an operation conversion module.

The preprocessing module is used for preprocessing a control signal generated by each control module of the manipulation component, converting same into a signal corresponding to the control signal input in each application program, and generating a respective preprocessing record for each application program.

The operation conversion module is used for converting the control signal generated by each control module of the manipulation component according to the preprocessing record of a certain application program during the running process of this application program. The converted control signal finally becomes a signal corresponding to the control signal of the application program and then is executed.

In present embodiment, the preprocessing module of the racing gravity game C comprises following steps.

Firstly, a conversion preprocessing of the key module is implemented.

When the racing gravity game C is run on one Android pad computer,

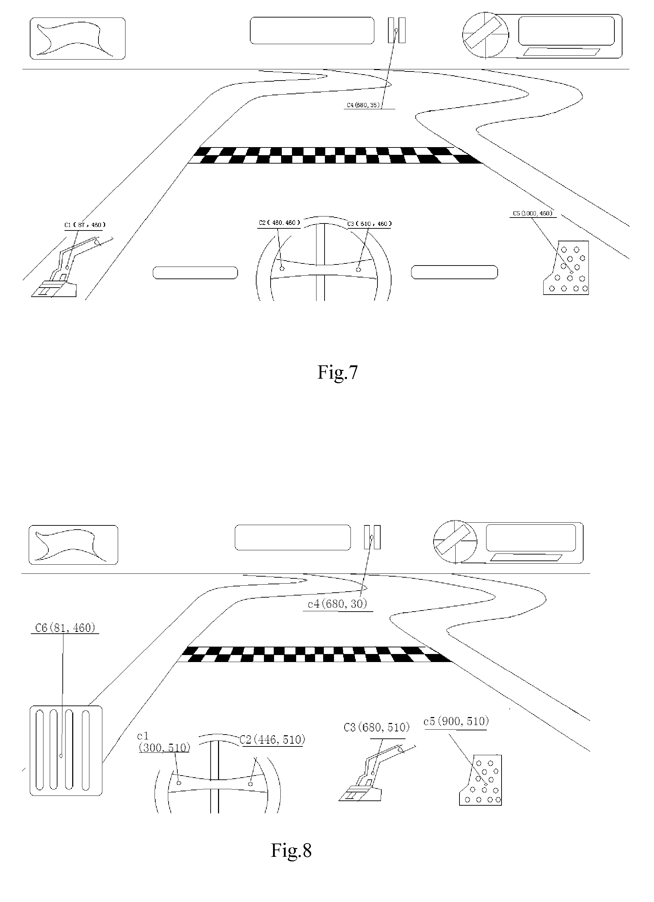

We find that the racing gravity game C has a user interface with two scenes which corresponding to different screen touching areas should be replaced by the keys. Fig.7 has shown the user interface of scene 1, and Fig.8 has shown the user interface of scene 2.

We find that the scene 1 of the racing gravity game C has five following screen areas whose touching controls should be replaced by the key, having following coordinates:

C1(87, 460)

C2(460, 460)

C3(610, 460)

C4(680, 35)

C5(1000, 460)

The five screen areas use K1, K5, K6, K8 and K7 as replacing keys.

The scene 2 of the racing gravity game C has five following screen areas whose touching controls should be replaced by the key, having following coordinates:

C1(300, 510)

C2(446, 510)

C3(680, 510)

C4(680, 30)

C5(900, 510)

C6(81, 460)

The six screen areas use K1, K2, K4, K3, K5 and K8 as replacing keys.

The racing gravity game C has following conversion preprocessing record for the key module.

Group number for the preprocessing record: Two groups

Group 1

k1 (87, 460)

k2(460, 460)

k3(610, 460)

k4(680, 35)

k5(1000, 460)

Group 2

k1(300, 510)

k2(446, 510)

k3(680, 510)

k4(680, 30)

k5(900, 510)

k6(81,460)

The conversion preprocessing for the gravity sensor module and sensor module in the racing gravity game C is similar as that in the racing gravity game A, and the preprocessing records are the same as well.

The operation conversion module of present embodiment is same as that in embodiment 2.

Embodiment 4

An information processing method for an information processing terminal is provided. The information processing terminal comprises an execution component for loading and executing applications, a manipulation component for controlling and operating the applications in the execution component and a display component for displaying a user interface of each application, wherein the manipulation component is used as an external manipulation device of the execution component by accessing the execution component via a wireless or wired interface. The manipulation component comprises one or more of the following control modules: a key module, a gravity sensor module, a gyroscope sensor module and a voice input module. The information processing method comprises following steps:

a preprocessing step of preprocessing a control signal generated by each control module of the manipulation component, converting same into a signal corresponding to the control signal input in each application program, and generating a respective preprocessing record for each application program;

an operation conversion step of converting the control signal generated by each control module of the manipulation component according to the preprocessing record of a certain application program during the running process of this application program, wherein the converted control signal finally becomes a signal corresponding to the control signal of the application program and then is executed.

The preprocessing step comprises one or more of the following conversions.

a) Conversion preprocessing of the key module
A screen touching operation which should be replaced by a key in each application is corresponded to a key in the key module of the manipulation component for such replacing, in which, the generated preprocessing record is a series of corresponding relationships between the key and the screen touching operation.

b) Conversion preprocessing of the gravity sensor module
One or more gravity sensing axes employed in each application are corresponding to one or more gravity sensing axes of the gravity sensor module of the manipulation component one by one, in which, the generated preprocessing record comprises corresponding relationships between the one or more gravity sensing axes, corresponding relationships between the positive and negative directions of each corresponding gravity sensing axis and sensitivity coefficients of each corresponding gravity sensing axis.

c) Conversion preprocessing of the gyroscope sensor module
One or more gyroscope axes employed in each application are corresponding to one or more gyroscope axes of the gyroscope sensor module of the manipulation component one by one, in which, the generated preprocessing record comprises corresponding relationships between the one or more gyroscope axes, corresponding relationships between the positive and negative directions of each corresponding gyroscope sensing axis and sensitivity coefficients of each corresponding gyroscope sensing axis.

d) Conversion preprocessing of the voice input module
A screen touching operation which should be replaced by a voice instruction in each application is corresponded to a voice instruction input via the voice input module of the manipulation component, in which, the generated preprocessing record is corresponding relationships between a series of the voice instructions and the screen touching operation.

Embodiment 5

An information processing method for an information processing terminal is provided, which is the same as embodiment 2 but different in that, such information processing method further comprises when one application operates in different scenes so that a control signal generated by a same control module on the execution component should have different conversions, multiple groups of preprocessing record would be generated in the corresponding conversion preprocessing step of such control module in the preprocessing record

Embodiment 6

An information processing method for an information processing terminal is provided, which is the same as embodiment 2 but different in that, such information processing method further comprises selecting one group of preprocessing record which is used for operating the conversion module via an artificial operation from the multiple groups of preprocessing record corresponding a certain control module in the preprocessing record of one application during an operation process of the application. The artificial operation comprises a key, a voice instruction or a menu selection operation.

Embodiment 7

An information processing method for an information processing terminal is provided, which is the same as embodiment 2 but different in that, such information processing method further comprises packaging respective preprocessing record of each application in a document form together with installation program of each application into one installation package which is then stored on a server of an app store, wherein when setting up, the installation package is downloaded from the server to the intelligent processing equipment, in which the preprocessing record is stored in a special directory of the application after being unpackaged, and when the application is started up, the corresponding preprocessing record is loaded into a system memory from the special directory.

**Claims**

1.  An information processing terminal comprising an execution component for loading and executing applications, a manipulation component for controlling and operating the applications in the execution component and a display component for displaying a user interface of each application, wherein the manipulation component is used as an external manipulation device of the execution component by accessing the execution component via a wireless or wired interface, **characterised in that** the manipulation component comprises one or more of following control modules: a key module, a gravity sensor module, a gyroscope sensor module and a voice input module, wherein;
    the execution component also comprises a preprocessing module and an operation conversion module;
    the preprocessing module is used for preprocessing a control signal generated by each control module of the manipulation component, converting same into a signal corresponding to the control signal input in each application program, and generating a respective preprocessing record for each application program;
    the operation conversion module is used for converting the control signal generated by each control module of the manipulation component according to the preprocessing record of a certain application program during the running process of this application program, and the converted control signal finally becomes a signal corresponding to the control signal of the application program and then is executed.

2.  The information processing terminal according to claim 1, **characterised in that** according to a type of the control module deployed for the manipulation component, the preprocessing module comprises one or more of following conversions:

    a) conversion preprocessing of the key module
    a screen touching operation which should be replaced by a key in each application is corresponded to a key in the key module of the manipulation component for such replacing, in which, the generated preprocessing record is a series of corresponding relationships between the key and the screen touching operation;
    b) conversion preprocessing of the gravity sensor module
    one or more gravity sensing axes employed in each application are corresponding to one or more gravity sensing axes of the gravity sensor module of the manipulation component one by one, in which, the generated preprocessing record comprises corresponding relationships between the one or more gravity sensing axes, or a sensitivity coefficient of the corresponding gravity sensing axis is further defined;
    c) conversion preprocessing of the gyroscope sensor module
    one or more gyroscope axes employed in each application are corresponding to one or more gyroscope axes of the gyroscope sensor module of the manipulation component one by one, in which, the generated preprocessing record comprises corresponding relationships between the one or more gyroscope axes;
    d) conversion preprocessing of the voice input module
    a screen touching operation which should be replaced by a voice instruction in each application is corresponded to a voice instruction input via the voice input module of the manipulation component, in which, the generated preprocessing record is corresponding relationships between a series of the voice instructions and the screen touching operation.

3. The information processing terminal according to claim 2, **characterised in that** the screen touching operation in step a) and d) is one or more screen points, one or more screen vectors, one or more screen curves which are screen touched or clicked, wherein the screen touching operation comprises an ordinal operation on a single-channel touch device and simultaneous operations in a multi-channel touch device.

4. The information processing terminal according to claim 2, **characterised in that** the b) conversion preprocessing of the gravity sensor module further comprises recording positive and negative directions of each corresponding gravity sensing axis of one or more gravity sensor modules and the generated preprocessing record comprises corresponding relationships between the positive and negative directions of each corresponding gravity sensing axis.

5. The information processing terminal according to claims 2-4, **characterised in that** the b) conversion preprocessing of the gravity sensor module further comprises defining a sensitivity coefficient of each corresponding gravity sensing axis of one or more gravity sensor modules and the generated preprocessing record comprises corresponding relationships between the sensitivity coefficients of each corresponding gravity sensing axis.

6. The information processing terminal according to claim 2, **characterised in that** the c) conversion preprocessing of the gyroscope sensor module further comprises recording positive and negative directions of each corresponding gyroscope axis of one or more gyroscope sensor modules and the generated preprocessing record comprises corresponding relationships between the positive and negative directions of each corresponding gyroscope axis.

7. The information processing terminal according to claim 2, **characterised in that** the c) conversion preprocessing of the gyroscope sensor module further comprises defining a sensitivity coefficient of each corresponding gyroscope axis of one or more gyroscope sensor modules, and the generated preprocessing record comprises corresponding relationships between the sensitivity coefficients of each corresponding gyroscope axis.

8. The information processing terminal according to claim 1 or 2, **characterised in that** the display component and the execution component are integrated into one device.

9. The information processing terminal according to claim 1 or 2, **characterised in that** the execution component is an intelligent TV set-top box using a rockchip microprocessor, a flash memory, Android system as operating system and having a HDMI output interface and a plurality of USB2.0 interfaces.

10. The information processing terminal according to claim 2, **characterised in that** the manipulation component is an air mouse remote controller including a 3-axis gravity sensor module and a 3-axis gyroscope sensor module and communicating with Dongle connecting to the USB interfaces of the TV set-top box via a wireless manner for manipulating the same.

11. An information processing method for an information processing terminal, wherein the information processing terminal comprises an execution component for loading and executing applications, a manipulation component for controlling and operating the applications in the execution component and a display component for displaying a user interface of each application, wherein the manipulation component is used as an external manipulation device of the execution component by accessing the execution component via a wireless or wired interface, and the manipulation component comprises one or more of the following control modules: a key module, a gravity sensor module, a gyroscope sensor module and a voice input module, **characterised in that** the information processing method comprises following steps:

a preprocessing step of preprocessing a control signal generated by each control module of the manipulation component, converting same into a signal corresponding to the control signal input in each application program, and generating a respective preprocessing record for each application program;
an operation conversion step of converting the control signal generated by each control module of the manipulation component according to the preprocessing record of a certain application program during the running process of this application program, wherein the converted control signal finally becomes a signal corresponding to the control signal of the application program and then is executed.

12. The information processing method for an information processing terminal according to claim 11, **characterised in that** according to a type of the control module deployed for the manipulation component, the preprocessing step comprises one or more of the following conversions:

a) conversion preprocessing of the key module a screen touching operation which should be replaced by a key in each application is corresponded to a key in the key module of the manipulation component for such replacing, in which, the generated preprocessing record is a series of corresponding relationships between the key and the screen touching operation;

b) conversion preprocessing of the gravity sensor module

one or more gravity sensing axes employed in each application are corresponding to one or more gravity sensing axes of the gravity sensor module of the manipulation component one by one, in which, the generated preprocessing record comprises corresponding relationships between the one or more gravity sensing axes;

c) conversion preprocessing of the gyroscope sensor module

one or more gyroscope axes employed in each application are corresponding to one or more gyroscope axes of the gyroscope sensor module of the manipulation component one by one, in which, the generated preprocessing record comprises corresponding relationships between the one or more gyroscope axes;

d) conversion preprocessing of the voice input module

a screen touching operation which should be replaced by a voice instruction in each application is corresponded to a voice instruction input via the voice input module of the manipulation component, in which, the generated preprocessing record is corresponding relationships between a series of the voice instructions and the screen touching operation.

13. The information processing method for an information processing terminal according to claim 12, **characterised in that** the screen touching operation in step a) and d) is one or more screen points, one or more screen vectors, one or more screen curves which are screen touched or clicked, and the screen touching operation comprises an ordinal operation on a single channel touch device and simultaneous operations in a multi-channel touch device.

14. The information processing method for an information processing terminal according to claim 12, **characterised in that** the b) conversion preprocessing of the gravity sensor module further comprises recording positive and negative directions of each corresponding gravity sensing axis of one or more gravity sensor modules and the generated preprocessing record comprises corresponding relationships between the positive and negative directions of each corresponding gravity sensing axis.

15. The information processing method for an information processing terminal according to claim 12 or 14, **characterised in that** the b) conversion preprocessing of the gravity sensor module further comprises defining a sensitivity coefficient of each corresponding gravity sensing axis of one or more gravity sensor modules and the generated preprocessing record comprises corresponding relationships between the sensitivity coefficients of each corresponding gravity sensing axis.

16. The information processing method for an information processing terminal according to claim 12, **characterised in that** the c) conversion preprocessing of the gyroscope sensor module further comprises recording positive and negative directions of each corresponding gyroscope axis of one or more gyroscope sensor modules and the generated preprocessing record comprises corresponding relationships between the positive and negative directions of each corresponding gyroscope axis.

17. The information processing method for an information processing terminal according to claim 12 or 16, **characterised in that** the c) conversion preprocessing of the gyroscope sensor module further comprises defining a sensitivity coefficient of each corresponding gyroscope axis of one or more gyroscope sensor modules and the generated preprocessing record comprises corresponding relationships between the sensitivity coefficients of each corresponding gyroscope axis.

18. The information processing method for an information processing terminal according to claim 11, **characterised in that** further comprising when one application operates in different scenes so that a control signal generated by a same control module on the execution component should have different conversions, multiple groups of preprocessing record would be generated in the corresponding conversion preprocessing step of such control module in the preprocessing record.

19. The information processing method for an information processing terminal according to claim 11, **characterised in that** further comprising selecting one group of preprocessing record which is used for operating the conversion module via an artificial operation from the multiple groups of preprocessing record corresponding a certain control module in the preprocessing record of one application during an operation process of the application.

20. The information processing method for an information processing terminal according to claim 19, **characterised in that** the artificial operation comprises a key, a voice instruction or a menu selection operation.

21. The information processing method for an information processing terminal according to claim 11, **characterised in that** further comprising packaging respective preprocessing record of each application in a document form together with installation program of each application into one installation package which is then stored on a server of an app store, wherein when setting up, the installation package is downloaded from the server to the intelligent processing equipment, in which the preprocessing record is stored in a special directory of the application after being unpackaged, and the corresponding preprocessing record is loaded into a system memory from the special directory when the application is started up.

LED Lamp              Power Source Switch

USB Interface 1 2 3     HDMI Interface     DC Input

Fig.1

micro phone

LED Lamp

Fig.2

RX1

RX2

RX3

3-axis gravity sensor module

TX1

TX2

TX3  3-axis   gyroscope sensor module

Fig.3                            Fig.4

C4 (680, 35)

V11(1050,150)

V12(950,230)

V22(340,350)

V21(260,430)

C1 ( 67 , 460 )

C2 ( 460  460 )  C3 ( 610 , 460 )

C5 (1000, 460)

Fig.5

C1
(1000, 460)

Fig.6

C4(680, 35)

C1(87, 480)

C2(480, 460)    C3(610, 460)

C5(1000, 460)

Fig.7

c4(680, 30)

C6(81, 460)

c1
(300, 510)    C2(446, 510)    C3(680, 510)    c5(900, 510)

Fig.8

# INTERNATIONAL SEARCH REPORT

| International application No. |
|---|
| PCT/CN2013/074782 |

## A. CLASSIFICATION OF SUBJECT MATTER

G06F 9/445 (2006.01) i

According to International Patent Classification (IPC) or to both national classification and IPC

## B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNPAT, CNKI, WPI, EPODOC: STB, TV, remote control, gravity sensor, gyro sensor, terminal, voice, input

## C. DOCUMENTS CONSIDERED TO BE RELEVANT

| Category* | Citation of document, with indication, where appropriate, of the relevant passages | Relevant to claim No. |
|---|---|---|
| X | CN 101620769 A (3DIJOY SHANGHAI CORP. et at.) 06 January 2010 (06.01.2010) description, pages 2-4 and figures 1-4 | 1-21 |
| A | CN 101504791 A (SHANGHAI QUANZHIYUAN NETWORK SCI.&TECHNOLOGY CO.,LTD.) 12 August 2009 (12.08.2009) the whole document | 1-21 |
| A | CN 102014255 A (GUANGDONG XINGHAI DIGITAL FAMILY IND. et al.) 13 April 2011 (13.04.2011) the whole document | 1-21 |
| A | CN 201887873 U (SHENZHEN SINO PENG IND. CO., LTD.) 29 June 2011 (29.06.2011) the whole document | 1-21 |

☐ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 July 2013 (08.07.2013) | 08 August 2013 (08.08.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LIU, Xi Telephone No. (86-10) 62413713 |
|---|---|

Form PCT/ISA /210 (second sheet) (July 2009)

## INTERNATIONAL SEARCH REPORT
### Information on patent family members

International application No.

PCT/CN2013/074782

| Patent Documents referred in the Report | Publication Date | Patent Family | Publication Date |
|---|---|---|---|
| CN 101620769 A | 06.01.2010 | None | |
| CN 101504791 A | 12.08.2009 | None | |
| CN 102014255 A | 13.04.2011 | None | |
| CN 201887873 U | 29.06.2011 | None | |

Form PCT/ISA /210 (patent family annex) (July 2009)